# EUROPEAN PATENT APPLICATION

(11) **EP 2 266 928 A1**
(43) Date of publication of application: **29.12.2010**
(21) Application number: 10382040.3
(22) Date of filing: 19.02.2010
(51) Int. Cl.: C04B 28/02

(54) **Mass for manufacturing products with a high neutron radioprotection capacity.**

(30) Priority: 20.02.2009 ES 200900481
(71) Applicant: Construcciones Tecnicas de Radioterapia, S.L., 45007 Toledo (ES)
(72) Inventor: Caruncho Rodado, Juan Manuel, 45007 TOLEDO, SPAIN (ES)
(74) Representative: Del Valle Valiente, Sonia

(57) **Abstract**

The invention relates to a mass for manufacturing products with a high neutron radioprotection capacity which, like that of any conventional concrete, is structured based on cement or mixture thereof with calcium sulfate (anhydrite), aggregates, water and chemical additives modifying the characteristics of the concrete. According to the invention, said mass uses as an aggregate colemanite and variable parts of borax, with a very continuous grain size to achieve a perfect homogeneity in the mass, determining an optimal barrier effect against neutron radiations, which allows considerably decreasing the wall thickness, without adversely affecting the barrier effect. The mass is suitable for obtaining poured concrete, concrete for bricks, concrete for slabs and dry mortar, which can be used in building radioactive premises such as radiotherapy and brachytherapy bunkers, radiology walls, etc. This concrete has no structural capacity.

## Description

### OBJECT OF THE INVENTION

The present invention relates to a mass, especially designed for manufacturing products with a high neutron radioprotection capacity, such as concretes, bricks, slabs and mortars.

The object of the invention is to achieve a mass, with high density and homogeneity, with an optimal barrier effect against neutrons, which allows a marked reduction of the wall thickness to achieve the same barrier effect against said radiations.

The invention is applicable to any radiological protection system, such as containers and/or mobile barriers of radioactive premises, radiotherapy bunkers, or any installation in which the existence of neutrons is expected.

Therefore the mass of the invention is comprised in the field of the manufacture of raw materials and construction products which can be used in forming radiologically closed premises.

### BACKGROUND OF THE INVENTION

Concretes with radioprotection capacity have, in addition to the usual components of cement, water and chemical additives which vary depending on the characteristics which are intended for same, such as strength, setting time, protection against freezing, assurance of the absence of deformation, marine environment, etc, and an aggregate differentiating them from conventional concretes.

The drawback of this type of concrete is that in order to provide good radioprotection properties, it is necessary to have a considerable wall thickness, with the consequent and negative repercussion at the level of weights, space and costs.

### DESCRIPTION OF THE INVENTION

The mass proposed by the invention fully and satisfactorily solves the aforementioned drawbacks, based on obtaining a perfect homogeneity for it.

To that end and more specifically, said mass, from the classic components of cement, water and chemical additives, incorporates colemanite as the main aggregate. Complementarily, it has been provided that said colemanite has a very continuous grain size, which grain size will be variable depending on whether the mass is intended for obtaining poured concrete, bricks, slabs or mortar.

Colemanite (Ca₂B₆O₁₁ 5H₂O) is a calcium borate which, due to its boron content and the hydrogen contained in its water molecules, is very effective in neutron attenuation, together with other aspects of the components of the mass which favor the achievement of the objective.

More specifically, said grain size will be comprised between 0 and 25 millimeters for obtaining poured concrete, between 0-12 for obtaining bricks, between 0 and 8 millimeters for slabs and between 0 and 1.5 millimeters for mortar. These dimensions can vary ± 25% depending on the dimensions of the end product.

In any case, the grain size curves of all the fractions of intervening colemanite grains, must be similar to Fuller's curve.

### DESCRIPTION OF THE DRAWINGS

To complement the description which is being made and for the purpose of aiding to better understand the features of the invention, according to a preferred practical embodiment thereof, a set of drawings is attached as an integral part of said description, in which the following has been depicted with an illustrative and non-limiting character:

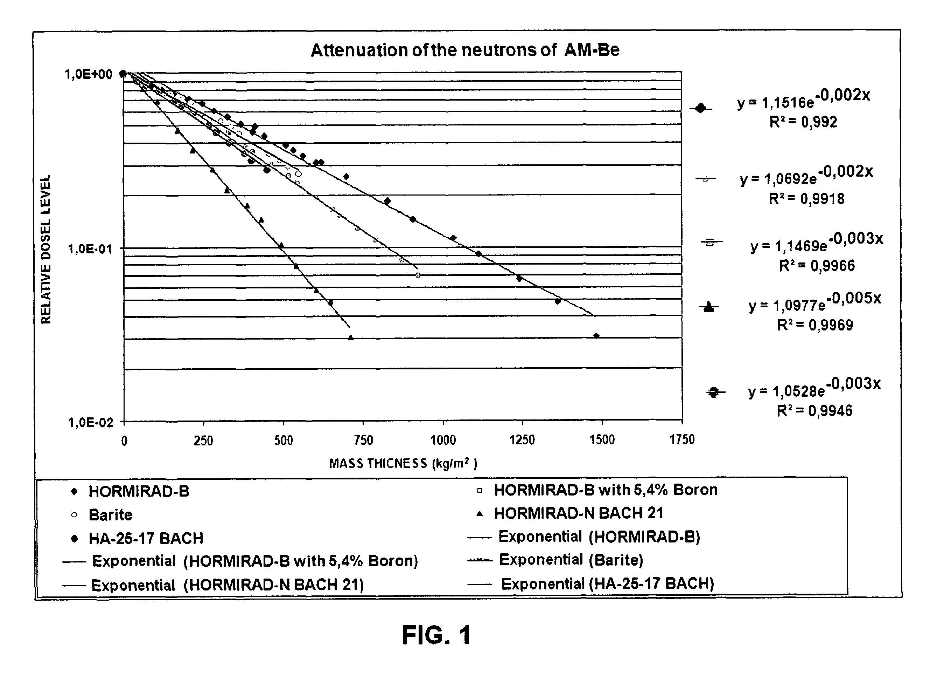

Figure 1 shows a graph depicting the attenuation of the neutrons of the mass of the invention as a function of the level of the mass thickness of different samples.

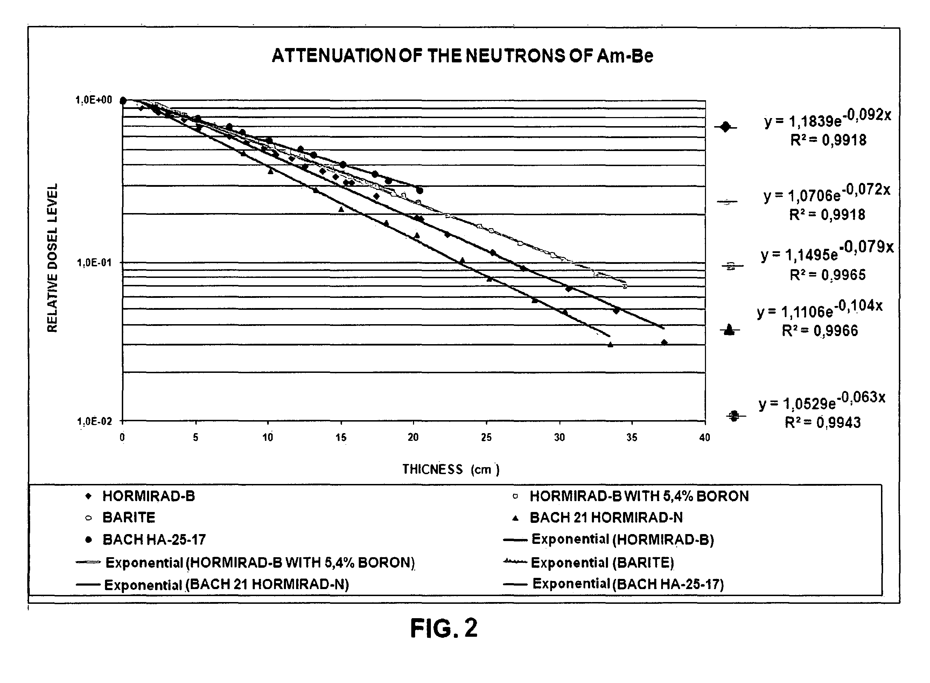

Figure 2 shows a depiction similar to that of Figure 1, in which the attenuation of the neutrons is a function of the wall thickness.

### PREFERRED EMBODIMENT OF THE INVENTION

As has been previously mentioned, the heavy mass proposed by the invention allows obtaining poured concrete, concrete for bricks, concrete for slabs or dry mortar.

In a practical embodiment of the poured concrete, the following mixture provided in % by volume has been made:

| ***Volume distribution*** | ***%*** |
|---|---|
| Cement | 6.5 |
| Water | 10.8 |
| Colemanite | 82.3 |
| Additives | 0.4 |

These figures can vary ± 10% depending on the production processes to be used, curing, fraction of the aggregate to be used, and priority weight objectives such as, radioprotection coefficients, mechanical strengths of the mass, cracking, etc.

BORAX can be added to this dosage in ratios close to an enrichment of the mixture of about a ratio of 10% boron content with limits of ± 20% of the total of the total volume of the samples, depending on the control of the dissolution of the components in water.

In the cases in which the grain size fraction of the colemanite is small in size, i.e., that the maximum size of the aggregate in the fraction is less than 8 or 10 mm, the variations of the dosages of the previous formulation may be even greater than 10% due to the solubility of colemanite in water.

Density is not a parameter to be specifically sought, and will be a consequence of the optimization of the mixture, nevertheless it will be about 2.2 Kg/dm³.

The cements to be used are of the "32.5", "42.5" or "52.5" Portland type depending on the objective to be achieved, without this aspect involving significant variations in the neutron radioprotection capacity.

Another dosage performed with the objective of a greater neutron radioprotection consists of the use of a similar dosage, in which the Portland cement is substituted with a mixture of cement of calcium aluminate and calcium sulfate (anhydrite), obtaining a fast crystallization of ettringite (3CaO Al₂O₃ 3CaSO₄ 32H₂O) being obtained and therefore considerably increasing the amount of hydrogen molecules, which is very effective for capturing neutrons.

## Claims

1. A mass for manufacturing products with a high neutron radioprotection capacity, such as enclosures for radioactive premises and the like, in the form of poured concrete, bricks, slabs, or dry mortar, of the type of those incorporating cement, aggregates, water and chemical additives which vary depending on the characteristics which are required for said mass such as strength, setting time, protection against freezing and others, **characterized in that** colemanite and possibly borax participate therein as an aggregate, in order to obtain an optimal homogeneity in the mass.

2. The mass for manufacturing products with a high neutron radioprotection capacity according to claim 1, **characterized in that** both for obtaining poured concrete and concrete for bricks, colemanite with a grain size less than 25 millimeters, combined with powder borax, is used.

3. The mass for manufacturing products with a high neutron radioprotection capacity according to claim 1, **characterized in that** for its application for obtaining concrete for slabs, colemanite with a grain size less than 8 millimeters, as well as metal filaments, susceptible of being enriched with powder borax, participate in the mass.

4. The mass for manufacturing products with a high neutron radioprotection capacity according to claim 1, **characterized in that** for obtaining dry mortar the mass incorporates colemanite with a grain size less than 1.5 millimeters, being susceptible of being enriched with powder borax.
